# EUROPEAN PATENT SPECIFICATION

(11) **EP 1 209 935 B1**
(45) Date of publication and mention of the grant of the patent: **12.10.2005**
(21) Application number: 00204177.0
(22) Date of filing: 24.11.2000
(51) Int. Cl.: H04Q 7/38

(54) **Fraud detection method for mobile telecommunication networks**
Betrugsfeststellungsverfahren für Mobiltelekommunikationsnetze
Méthode de détection de fraude pour réseaux de télécommunication mobile

(43) Date of publication of application: 29.05.2002
(73) Proprietor: TELEFONAKTIEBOLAGET LM ERICSSON (publ), 164 83 Stockholm (SE)
(72) Inventor: Gonzalez Plaza, Alfredo, 28820 Coslada (Madrid) (ES)
(74) Representative: Tonscheidt, Andreas

(56) References cited:
- EP-A- 0 544 095
- US-A- 5 991 617
- US-A- 6 038 555

## Description

### Field of the Invention

This invention relates generally to the fraud detection in mobile telecommunication networks. More specifically, this invention relates to a method for obtaining, storing and processing significant data for fraud detection.

### Background

The security group in the 3^{rd} Generation Partnership Project, in charge of Security Architecture (hereinafter referred to to as "3GPP (SA3)"), have introduced in the Technical Specification Group Services and System Aspects 33.102 v3.5.0 (hereinafter referred to as 3G TS 33.102) a new procedure called Authentication Failure Report. Besides, the standard signalling messages and message parameters involved in said new procedure are described in the Mobile Application Part (hereinafter referred to as MAP) specification 29.002 v3.4.0 issued by the 3GPP Technical Specification Group Core Network (hereinafter said specification is referred to as 3GPP TS 29.002).

Most of the previous generations of mobile systems already make use to some extent of Authentication procedures to ensure that a user accessing the mobile network is the one who claims. And not only the mobile users but rather the different network entities involved in certain mobile communications are already objects of authentication to some extent. Any interested reader can refer to Technical Specification 03.20 for GSM "Security related network functions" from the European Telecommunication Standard Institute (generally known and hereinafter referred to as TS ETSI GSM 03.20, "Security related network functions"). These authentication mechanisms are intended to preclude the access to the mobile networks and mobile services for unauthorised users or network entities. Moreover, the needs for authentication of mobile users and network entities do not only make sense for the Pan-European mobile networks like GSM, but also for the Pan-American mobile networks like those based on the Interim Specification number 41 (hereinafter referred to as IS-41), for example.

These authentication mechanisms from previous generations of mobile systems are naturally evolving, including new security features, within the scope of the 3^{rd} mobile systems generation (hereinafter simply referred to as 3G). Nowadays, a well-known instance of 3G is the Universal Mobile Telecommunication System (hereinafter referred to as UMTS) and security aspects, security features and security architecture, such as those related to subscriber Authentication and network entity Authentication, are described in the technical specification above mentioned, 3G TS 33.102.

Irrespective of particular network architectures that these mobile systems generations might have, including different standards such as the Pan-European or Pan-American standards above mentioned, some commonalties are pointed out following this to better understand the wider scope of the present invention.

On the one hand, any mobile network like the one in Fig.-1- can be regarded as consisting of a Home Environment (N-1000) (hereinafter referred to as HE), a Serving Network (N-2000) (hereinafter referred to as SN), and a number of mobile terminals, namely User Equipment (N-3000) (hereinafter abbreviated as UE). On the other hand, such a mobile network in Fig.-1- can be regarded as consisting of a Core Network (N-0100) and an Access Network (N-2200) wherein the former consists of the Home Environment plus the Serving Network excluding network entities from the Access Network.

Furthermore, the existing mobile systems already offer support with shared and dedicated network infrastructure for both Circuit Switched (N-2120) (hereinafter CS) services, such as pure telephony, as well as Packet Switched (N-2110) (hereinafter PS) services, such as other data transmission oriented services. The packet switched services have been lately introduced over the 2G mobile systems. A well-known instance of the existing technology to support the packet switched services is the GSM Packet Radio System (hereinafter abbreviated as GPRS).

The HE (N-1000) represents all the network entities which uniquely handle and give support to home subscribers of a certain Public Land Mobile Network (hereinafter PLMN). For example, the Home Location Register (N-1102) (hereinafter HLR) is the network entity of a certain PLMN in charge of holding all the subscription data for home subscribers of said PLMN, and thus part of the HE. Another network entity also part of the HE is the Authentication Centre (N-1101) (hereinafter AUC), which is in charge of generating and providing authentication and key data either as triplets for GSM or as vectors for UMTS. These authentication and key data are respectively intended to check that any home subscriber is the one who claims, wherever he or she is accessing the mobile network, and to provide the means for ciphering the transmission through the radio path. A more detailed explanation of usage and procedures for 2G and 3G Authentication is further introduced in this description.

The SN (N-2000) represents all the network entities or resources in a certain PLMN that give service to mobile subscribers roaming in such a PLMN irrespective of being home or visitor subscribers. For example, the Mobile Service Switching Centre (also called Mobile Switching Centre, and hereinafter abbreviated as MSC) constitutes the interface between the radio system and the fixed networks. Said MSC is the network entity in charge of all switching functions related to Circuit Switching (CS), controlling the location and routing area wherein a certain subscriber is roaming, and thus part of the SN. Another network entity part of the SN is the Visitor Location Register (hereinafter abbreviated as VLR). Said VLR is a subscriber database holding relevant subscription data from all the subscribers currently roaming in the area controlled by such a VLR, and which were obtained from the corresponding HLR where each subscriber has his or her own subscription. At present, most of the existing GSM or IS-41 based mobile systems have implemented both entities collocated so that they are usually referred to as a unique entity (N-2121) by the abbreviation MSC/VLR. Furthermore, the evolved version of said MSC/VLR for the 3G mobile systems is generally referred to as 3G MSC/VLR. In a similar manner as said MSC/VLR is in charge of relevant subscription data, and carries out the CS functions, the Serving GPRS Support Node (N-2111) (hereinafter abbreviated as SGSN) performs similar tasks for PS functions and corresponding subscribers. The SGSN holds relevant subscription data from all the subscribers currently roaming in the area controlled by such an SGSN, and which were obtained from the corresponding HLR where each subscriber has his or her own subscription. Said SGSN is also in charge of all switching functions related to Packet Switching (PS), controlling the location and routing area wherein a certain subscriber is roaming, and thus part of the SN. Furthermore, the evolved version of said SGSN for the 3G mobile systems is generally referred to as 3G SGSN. Besides, Fig.-1- also shows a representative access network node for completeness purpose, namely the UMTS Terrestrial Radio Access Network (N2201) (hereinafter referred to as UTRAN).

The authentication procedure, generally speaking, is initially performed at the first radio contact from a mobile subscriber trying to gain access to the mobile network. In accordance with the specification 3G TS 33.102 above mentioned, the method was chosen in such a way as to achieve maximum compatibility with the current GSM security architecture and facilitate migration from GSM to UMTS. The method is composed of a challenge/response protocol identical to the GSM subscriber authentication and key establishment protocol combined with a sequence number-based one-pass protocol for network authentication. Even though this procedure is basically described following this, an interested reader could get more detailed explanations by reading said specification 3G TS 33.102 version 3.5.0, sections 5.1.1 and 6.3.1.

The challenge/response method from GSM formally starts by a request from the SN VLR/SGSN to the HE HLR/AUC to generate and provide authentication triplets (authentication vectors under 3G). Said authentication triplet consists of a random number RAND, an expected response XRES, and a ciphering Key CK. Each authentication triplet is valid, in principle, for just one authentication process, though they can be reused under certain circumstances. At reception of said triplets from the HE, the VLR/SGSN sends to the GSM Subscriber Identity Module (hereinafter abbreviated as SIM), which is responsible for performing GSM subscriber authentication and key agreement at the subscriber side, the received random number RAND. At the subscriber side, the RAND and a pre-stored subscriber identity key KI are used as inputs to algorithms A3 and A8 to produce a signed response SRES and a ciphering key CK. The SIM returns the SRES obtained to the challenger VLR/SGSN, which will check the lately received SRES versus the stored XRES. Provided that they match each other, the authentication is found to be successful and the CK, that both VLR/SGSN and SIM have, can be locally used to cipher further communication through the radio path.

Fig.-2- schematically presents how this challenge/response authentication method evolves for UMTS networks. In accordance with 3G TS 33.102, the HE HLR/AUC is requested (S-200) to generate and provide authentication vectors consisting of a random number RAND, an expected user response XRES, a cipher key CK, an integrity key IK, and a network authentication token AUTN. Upon receipt of such a request from the SN VLR/SGSN, the HE HLR/AUC generates (B-090) and sends an ordered array of n Authentication Vectors (S-210) (the equivalent of GSM "triplets", and hereinafter referred to as AV) to the SN VLR/SGSN wherein these authentication vectors are stored (B-100). As for GSM, each authentication vector is valid for one authentication and key agreement process between the VLR/SGSN and the User Services Identity Module (hereinafter referred to as USIM). As opposite to GSM, these vectors cannot be reused. In a security context, such a USIM is responsible for performing UMTS subscriber and network authentication, and key agreement. Said USIM should also be capable of performing GSM authentication and key agreement to enable the subscriber to roam easily into a GSM Radio Access Network. When the VLR/SGSN initiates an authentication and key agreement, it selects the next authentication vector from the array (B-110) and sends the parameters RAND and AUTN to the user (S-220). The USIM checks whether AUTN can be accepted by computing the anonymity key AK as a function of RAND (B-120) and then, once AK is known, by extracting from the received AUTN the sequence number SQN (B-130), the authentication management field AMF (B-140), and the message authentication code MAC (B-150). Next USIM computes XMAC as a function of RAND, SQN, and AMF (B-160) and compares such an XMAC value with the previously extracted MAC (B-170). Provided that these values are found to be different, the user sends a "*user authentication reject*" (S-230) back to the VLR/SGSN with an indication of the cause, and the procedure is abandoned. This result is understood as an unsuccessful network authentication. In this case, the SN VLR/SGSN shall initiate an Authentication Failure Report (S-240) towards the HE HLR indicating "wrong network signature" as failure cause. On the other hand, when MAC and XMAC match each other, USIM verifies that SQN value is in the correct range (B-180). Provided that USIM considers SQN is not in due range, it sends a "*synchronisation failure*" (S-250) back to the VLR/SGSN including an appropriate parameter, and the procedure is abandoned. If SQN is in range, USIM considers the network as successfully authenticated and computes a response RES, a cipher key CK and an integrity key IK by applying different functions to different combinations of authentication parameters (B-190). Said response RES is sent back to the VLR/SGSN (S-260). The VLR/SGSN compares the received RES with XRES (B-200). If said RES and XRES match each other the VLR/SGSN considers the authentication and key agreement exchange to be successfully completed. The established keys, CK and IK, will be locally used to cipher further communication through the radio path. But, if XRES and RES are found to be different, the SN VLR/SGSN shall initiate an Authentication Failure Report (S-270) procedure towards the HLR indicating "wrong user response" as failure cause. Moreover, the SN VLR/SGSN may also decide to re-attempt a new identification and authentication procedure towards the user.

In accordance with the 3G TS 33.102, this mechanism somewhat described above achieves mutual authentication by the user and by the network, showing knowledge of a secret key K which is shared between and available only to the USIM and the AUC in the user's HE. Moreover, a network authentication failure detected at the user side, namely by USIM, or a user authentication failure detected at the network side, namely by SN VLR/SGSN, they both trigger the new procedure "Authentication Failure Report".

The aim of this new procedure is to inform the Home Environment (HE) when an authentication has failed, including the failures due to an unsuccessful network authentication or unsuccessful user authentication. However, this procedure is not applicable to synchronisation failures, which are reported by a different procedure. In summary, such an Authentication Failure Report procedure is merely used to report the kind of failure (user or network) and the International Mobile Subscriber Identity (hereinafter referred to as IMSI) towards the HE.

At this point, another significant aspect to comment on, background of the present invention, is the fraudulent use of mobile services and mobile networks. One of the highest fraud exposures in mobile networks is due to call selling using supplementary services, and especially due to the difficult control of subscriber activities when said subscribers are roaming in a PLMN other than the home network. In this context, Call Selling is a fraudulent activity that consists in using a mobile subscription to sell long distance calling service throughout the world, below market price, and with the intention of not paying for such calls to the network operator. For example, a mobile subscriber may initiate fraudulent call selling by making use of Call-Forwarding service in HLR and Third-Party call service. Still another example of fraud is the Roaming Fraud. As a matter of fact, international roaming is possible for most of mobile systems wherein the fraud is carried out by initiating call selling operations by using foreigners subscriptions in certain countries where roaming is possible. This fraudulent activity can hardly be detected on time to act because of late reporting and billing from the operators involved. These and many other fraud risks have been identified and justify the efforts to provide the means to prevent fraud, and also to detect the specific fraudulent activity. In this respect, most of the mechanisms introduced around the authentication procedures are more oriented to fraud prevention than to the fraud detection as such.

Nevertheless, and assuming that said fraud prevention is not always achieved, great efforts are made to develop fraud detection systems robust enough to ensure a rapid detection of fraudulent activities. An important aspect to determine is the criteria to unambiguously identify that a fraud is committed. Rather than focusing on legal frames to determine fraud, this description is aimed to outline activities and situations which, isolated or combined, can indicate a fraudulent use of mobile network resources.

To this end, a new network entity generally known as Fraud Detection System (hereinafter referred to as FDS) was introduced in mobile networks. Said FDS is responsible for detecting the existence of fraud by analysing a certain amount of indicators. Such indicators are classified attending to type and way of use. As classifying indicators by type, the following three categories can be identified:
i) Usage indicators are defined by some criteria relating to the way in which a mobile telephone is used. Most types of fraud are characterised by unusually high usage. For example in call selling activities, the mobile terminal needs to register several call-forwarding numbers.
ii) Mobility indicators are defined by some criteria relating to the mobility of mobile user. For example number of location updating or hand-over during a defined time interval.
iii) Deductive indicators that arise as a result of a fraudulent behaviour: For example, use of conference calls, forwarded calls, etc.

As classifying indicators by way of use, the following three categories can be identified:
i) Primary indicators, which in principle, can be employed in isolation to detect fraud. For example, the number of call-forwarding services invoked within a defined time interval.
ii) Secondary indicators from which, in principle, useful information can be gained if they are considered in isolation, but which should not be solely used to detect fraud. For example, information about cell sites or switch areas involved in a certain call handling, since Call-selling for certain destinations is concentrated in areas where the buyers live.
iii) Tertiary indicators from which no useful information can be gained if they are considered in isolation, but which can, in principle, be used to provide essential information in connection with the detection of fraud. For example, the number of successful hand-over within a defined time interval. In this respect, a fraudulent call-selling service requires a stable position so that a low mobility, accompanied by other activities with corresponding indicators, might identify possible fraudulent activities. Obviously, many mobile users may have this low mobility behaviour without performing any fraud so further detection of other activities is essential before being able to determine fraud.

Such an FDS is supposed to post-process these indicators to determine whether a fraudulent activity is occurring or, at least, suspicious of occurring.

These two main, separate, and not connected aspects hereinabove commented on, that is the actions performed on authentication failure and the needs for fraud detection, are both background of the present invention as further justified in this description.

The Authentication procedure has been commented on for both 2G and 3G mobile networks. A new procedure, "Authentication Failure Report", has been introduced for 3G mobile systems like UMTS, however, no corresponding procedure exists for some 2G system like GSM.

Nevertheless, specific vendor additions are provided to enhance and complete the current standards for 2G mobile systems. For instance when an authentication failure is detected in an Ericsson provided MSC/VLR, said MSC/VLR logs all the relevant failure data, and activates an alarm. Said logging of authentication failure includes data such as date, time, IMSI, Mobile Subscriber ISDN number (hereinafter referred to as MSISDN, wherein ISDN stands for Integrated Services Digital Network), Cell Global Identifier (hereinafter CGI), and whether the MAP message "Authentication Reject" was sent or not.

These vendor solutions imply that in a multi-vendor and multi-operator environment it is not now possible to gather all the fraud related information regarding authentication failures for a single subscriber. Such an information would be stored in MSC/VLR from certain vendors whereas others will collect other authentication failure data along the different serving networks. Under these assumptions, such a solution cannot be taken as a basis for introducing a standard fraud detection system given that an MSC/VLR vendor identifier should always be used as initial fraud criterion to analyse. Then, depending on the specific MSC/VLR vendor, other available authentication failure data could be used for post-processing at the FDS.

Regarding fraud detection, other solutions exist in 2G mobile systems and have been adopted by different suppliers to some extent. One of the most common architecture to support fraud detection in mobile networks is illustrated in Fig.-3- where the FDS (N-1301) gathers the indicators required to perform the fraud analysis from the Call Data Records (hereinafter referred to as CDR) generated in the MSC/VLR (N-2122) or the SGSN (N-2112). Said CDRs are submitted through the Billing Gateway (N-2301) (hereinafter referred to as BGW), or any other Billing Mediation Device. As a consequence, the information received by the FDS is just related with the establishment of a call, whereas any other fraud related information, not call related, does not reach the FDS. This information is not received by the FDS by current means since it is not related with a call already established, and therefore there cannot be any CDR associated. For instance, fraud related information derived from an authentication failure does not imply any CDR to be received at the FDS under this solution. The case of call selling already commented on would have likely originated a CDR submitted in the past, whereas subsequent attempts to initiate such a call selling would get unsuccessful authentication results. In this respect, the fraud prevention is achieved, however, anyone skilled in the art can easily understand that fraud detection would be even worthwhile in order to know when new attempts to commit fraud are initiated.

On the other hand, and unlike 2G systems like GSM, there is an Authentication Failure Report procedure for IS-41 (TIA/EIA standards). Under said procedure, the report message is used by the Authentication Centre in IS-41 (hereinafter referred to as AC, unlike the one in GSM) in authentication failure data. With such a mechanism the HE can just control whether home subscribers are suffering or producing authentication failures.

However, the presently specified Authentication Failure Report procedure does not offer valuable information yet from a fraud detection perspective to take further actions. In this respect, Fig.-4- shows the existing operation Authentication_Failure_Report as specified in 3G TS 29.002 for the Mobile Application Part protocol, in terms of Operation and Parameters.

Still another drawback, from the current solutions fraud detection related, is that the CDR only exist when there is a call already established, whereas nothing can be detected with this solution as the fraudulent user equipment is trying to gain access to the network.

A further method for fraud prevention in cellular networks is described in US - A 5 991 617, in that an authentication based on user interactions is described. A 'Roaming Restrictor' is introduced to monitor roaming subscribers, request a manual authentication from roaming users, collect data from authentication failures and restrict access within a roaming network. The proposed method is complex to implement and demands roaming users to run uncomfortable manual authentication procedures.

### Summary of the Invention

The object of the present invention is a method for providing relevant information for fraud detection which overcomes the above mentioned drawbacks.

In accordance with the present invention, data related with unsuccessful authentication procedures, such 25 access type, authentication reattempt and server address, could be used for fraud detection.

The method gets advantage from the new introduced mechanism to report authentication failures in order to provide more valuable information from a fraud detection perspective towards the Home Environment, including the steps of:
a) obtaining secondary fraud indicators from failures in user authentication procedures due to unsuccessful network authentications or unsuccessful user authentications
b) including said secondary fraud indicators as new parameters of specific types in fields of the Authentication Failure Report message (hereinafter referred to as MAP AFR_req) sent from the Serving Environment (3G MSC/VLR, 3G SGSN) back to the Home Environment (HE HLR) in said authentication procedures
c) storing said messages in the Home Location Register (HLR) for further processing.

Another object of the method of the present invention is the forwarding of these fraud-related data collected in the Home Environment towards an appropriate operator specific device for Fraud Detection for processing in conjunction with primary fraud indicators for fraud detection purposes.

### Brief Description of the Drawings

For the sake of clarity and a better understanding of the scope and objects of the present invention, this detailed description should be taken in conjunction with the accompanying drawings, in which:
Fig.-1- is a block diagram representing a mobile telecommunication system from a subscriber and network authentication perspective. This system is structured attending to different criteria:
   - the Home Environment where the subscription resides versus the Serving Network where the subscriber is roaming;
   - the Core Network versus the Access Network and the User Equipment;
   - the Circuit Switching services versus the Packet Switched services and corresponding network support.
Fig.-2- is a flow chart schematically representing the authentication procedure as currently specified for 3G mobile systems like UMTS networks.
Fig.-3- is another block diagram representing a currently existing fraud detection system for call related fraudulent activities
Fig.-4- shows the prior art MAP operation Authentication_Failure_Report, as described by 3G TS 29.002 recommendations for UMTS, in terms of Operation and Parameters.
Fig.-5- is the block diagram representing the architecture required for a complete fraud detection system accordingly with the present invention.
Fig.-6- is a flow chart schematically representing the authentication procedure for 3G mobile systems like UMTS networks in accordance with the present invention.
Fig.-7- presents the new MAP operation Authentication_Failure_Report in terms of Operation and Parameters in accordance with a preferred embodiment of the present invention.
Fig.-8- is another flow chart schematically representing the sending of the MAP operation Authentication_Failure_Report with new proposed data, in accordance to the present invention, storage of said data in the HLR and further transmission of such data towards the FDS for fraud analysis.

### Detailed Description of Preferred Embodiments

There is very valuable information for fraud detection behind an authentication failure as explained hereinabove. The data related with authentication failure can never be used as primary indicator to detect fraud, since authentication is itself a method for fraud prevention, but said data can be used as secondary indicators so that further actions can be taken. However, the data sent in the UMTS Authentication Failure Report message are quite poor, from a fraud-detection point of view. Just the IMSI and the kind of failure are reported within such a MAP operation, as primary shown in Fig.-2- (S-240, S-270) and further stated in Fig.-4-.

On the other hand, there is quite valuable and significant information for fraud detection in the MSC/VLR, which is related or can be derived from an authentication failure. These significant data for fraud are considered as secondary indicators for fraud, and are part of fraud criteria in a Fraud Detection System.

In accordance with the present invention, other data already known by the MSC/VLR, when the authentication procedure shown in Fig.-2- takes place, should also be provided to the HE HLR within the MAP message Authentication Failure Report request (MAP AFR_req) (S-280, S-290) as shown in Fig.-6- and Fig.-7-. Some of said known data, relevant for fraud detection, are the following:
- Access type. In order to distinguish if the authentication procedure was initiated due to a call, an emergency call, a location updating, a supplementary service procedure or a short message transfer.
- Authentication reattempt. This indicates whether the failure was produced in a normal authentication attempt or it was due to an authentication reattempt. The latter indicates that there was a previous unsuccessful authentication.
- Server address. It indicates the address of the network element, either SN MSC/VLR or SN SGSN, where the authentication procedure took place. This data shall be included in order to have a reference to the physical location where the authentication failure had been produced.

Each of the three new parameters has its own advantage in accordance with the present invention.

The access type parameter can be used to evaluate the seriousness of the failure since it can be considered more serious a failure produced in a location updating than in a call set up, and the latter more serious than the one produced in a short message transfer. These considerations are based on some facts; for example, a successful location updating has to be performed previous to an unsuccessful call.

The authentication reattempt parameter is sent in order to know if the failure was produced on a first authentication procedure or during a reattempt. An authentication reattempt is performed in current networks since the failure could have been provoked by a Temporary Mobile Station Identity (hereinafter TMSI) mismatch, or by erroneous Authentication Vectors received from the previous MSC/VLR or SGSN server (the reattempt is performed after requesting new Authentication Vectors to the HLR). When the authentication reattempt is performed, the corresponding procedure is carried out with the correct IMSI (User Identity Request performed) and with correct Authentication Vectors (Send Authentication Info performed), thus an error in this case is of higher importance.

The interest of the server address from a fraud-detection point of view resides in the fact that some fraudulent activities like call selling in current mobile networks are associated with concrete geographical location.

These and other data not explained yet are identified as being of interest for a Fraud Detection System (FDS) as secondary indicators, and part of the fraud criteria analysis in said FDS. When new fraudulent activities are identified, new data will be found to be interesting as fraud indicators, and still part of the present invention. The scope of the present invention is not intended to be restricted to only these three identified and explained new data, to be included within the existing MAP AFR_req message, as anyone skilled in the art may easily understand. For example, and as an additional embodiment of the present invention, provided that the severity of fraud requires more accurate information about the geographical position where the fraud is committed, the user equipment position got by means of GPS facilities could also be sent in the MAP AFR_req message. As anyone skilled in the art may easily understand, known data at the MSC/VLR or SGSN, which are significant for fraud detection, can be included in the MAP AFR_req message. In this way, these data can be eventually submitted to the HE HLR and from there forwarded to an appropriate Fraud Detection System like the FDS.

In accordance with Fig.-7-, the proposal of a preferred embodiment of the present invention is that these data, namely the Access Type, the Authentication Reattempt, and the Server Address should be including as new specific parameters within the MAP AFR_req message. Moreover, still under a preferred embodiment of the invention, the Server Address should be better expressed in terms of different parameters such as MSC/VLR_address and SGSN_address in order to identify on what service, Circuit or Packet, the authentication has failed.

In accordance with the message and parameters format specified by 3G TS 29.002, the following new parameters could be included for the existing MAP message "authenticationFailureReport_req" in said specifications, 3G TS 29.002, as Fig.-7- states.
- "authenticationReattempt" of type "BOOLEAN"
- "accessType" of a new type "AccessType"
- "vlr-Number" of type "[0] ISDN-AddressString"
- "sgsn-Number" of type "[1] ISDN-AddressString"

Furthermore, the new type above introduced "AccessType" could also be declared following the ASN.1 notation as "ENUMERATED" with the following assignations: Call (0), emergencyCall (1), locationUpdating (2), supplementaryServices (3), shortMessage (4). As anyone skilled in the art can easily understand re-ordering the previous assignations will not substantially affect the object of the present invention under this preferred embodiment.

Moreover, the inclusion of these new data above mentioned in the MAP AFR_req operation, in accordance with the preferred embodiment of the invention as shown in Fig.-7-, should be understood in an illustrative and non-restrictive manner. In this respect, a secondary embodiment of the present invention suggests the inclusion of these new data above within the Extension Container field.

The MAP AFR_req message definition allows the introduction of new parameters in an extension container. All the data proposed in the present invention, as fraud indicators, could be included in the mentioned extension container.

Said extension container can be regarded as the means to introduce proprietary information in a standard message and thus, provided that the fraud indicators are included there, the result will be a proprietary solution to some extent.

As already stated above, one of the main objects of the present invention is that any operator can gather all the fraud information related with authentication faults from its own subscribers. With a proprietary solution this would not be achieved since the reception of that information would directly depend on the VLR/SGSN supplier and therefore it would indirectly depend on the serving operator (roaming situation for the subscriber). As a consequence, an operator could not gather all the fraud information regarding authentication fraud from its own subscribers. Nevertheless, though less efficient than the preferred embodiment, this second embodiment of the present invention also proposes reasonable means to provide an FDS with the required secondary indicators for fraud detection.

A further process step of the present invention is the reception of these new fraud related data, included in the MAP AFR_req operation, in the HE as Fig.-8- illustrates.

At reception of the MAP AFR_req message (S-700) the HLR will store the received data together with the time and date of the report (B-500).

When the number of failures reaches a given threshold value (B-510) for a certain subscriber an alarm shall be issued at the HLR (B-520). The value for such a threshold that triggers the alarm shall be configurable.

Next, an "Authentication Failure Alarm" (S-710) will be addressed to the Operation and Maintenance Gateway (hereinafter referred to as OMG) in the operator network. Then, through that Gateway said Authentication Failure Alarm (S-720) will reach the FDS.

On reception of such an alarm, the FDS would use the commands through the Operation and Maintenance Gateway (S-730) to request the stored logging of authentication failures (S-740) in HLR. Thus, the HLR logging regarding authentication failure report log shall be addressed as well to the Operation and Maintenance Gateway (S-750), so that they can be eventually forwarded to the FDS (S-760). Further, the FDS can analyse the received secondary indicators for fraud in conjunction with applicable fraud criteria (B-530). Moreover, these secondary indicators will be used in the FDS in conjunction with some primary indicators, as the number of call forwarding within a defined time interval, to detect fraud situations such as SIM cloning.

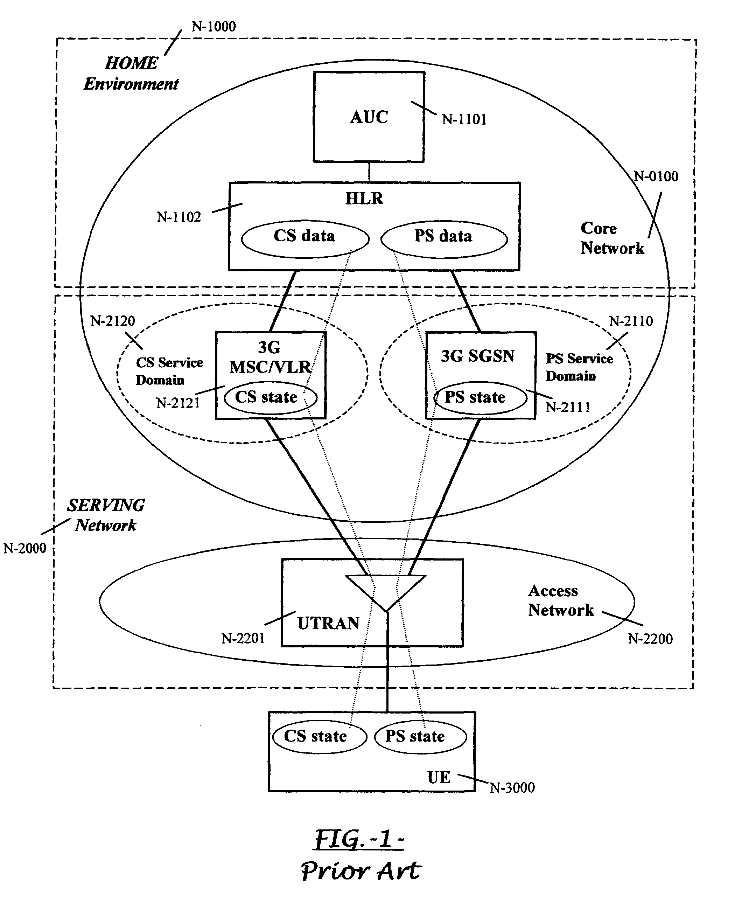

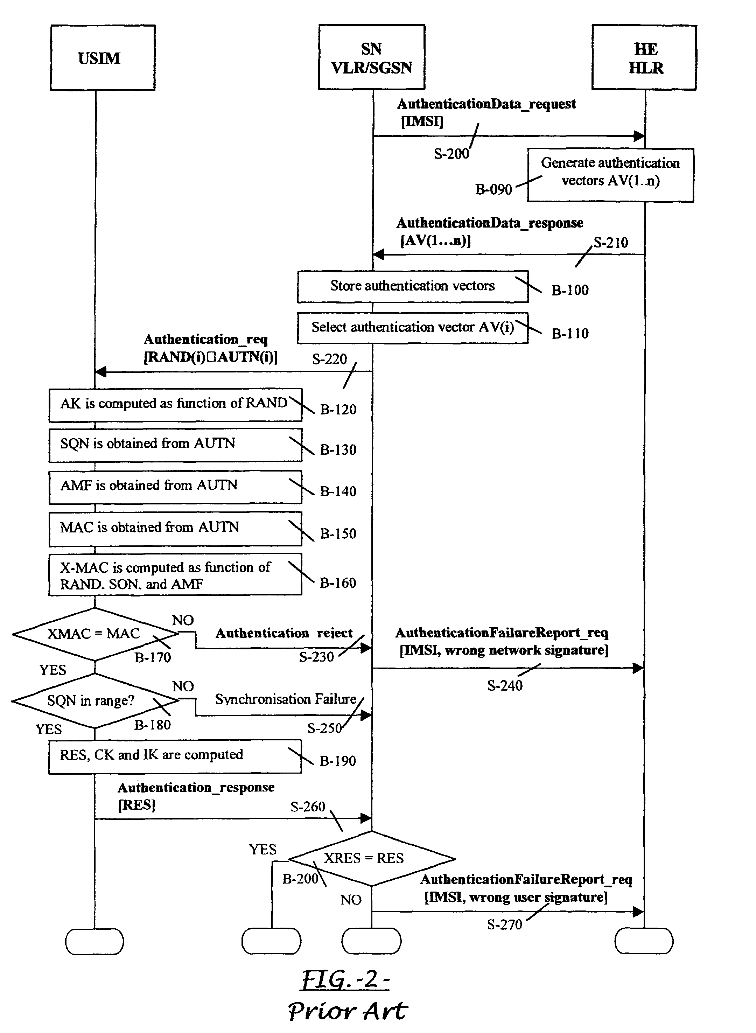

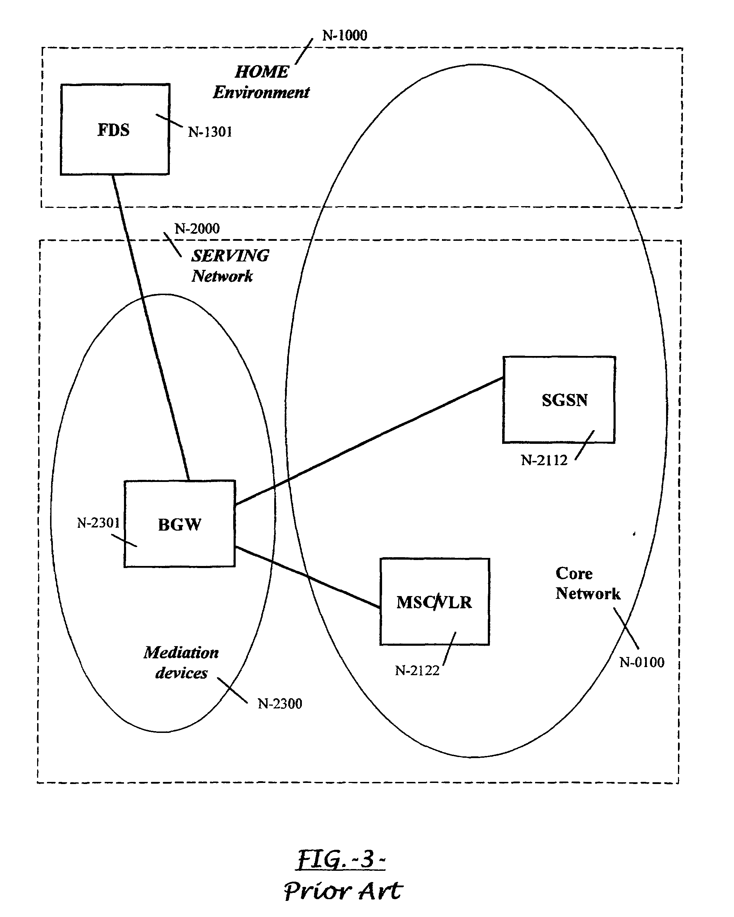

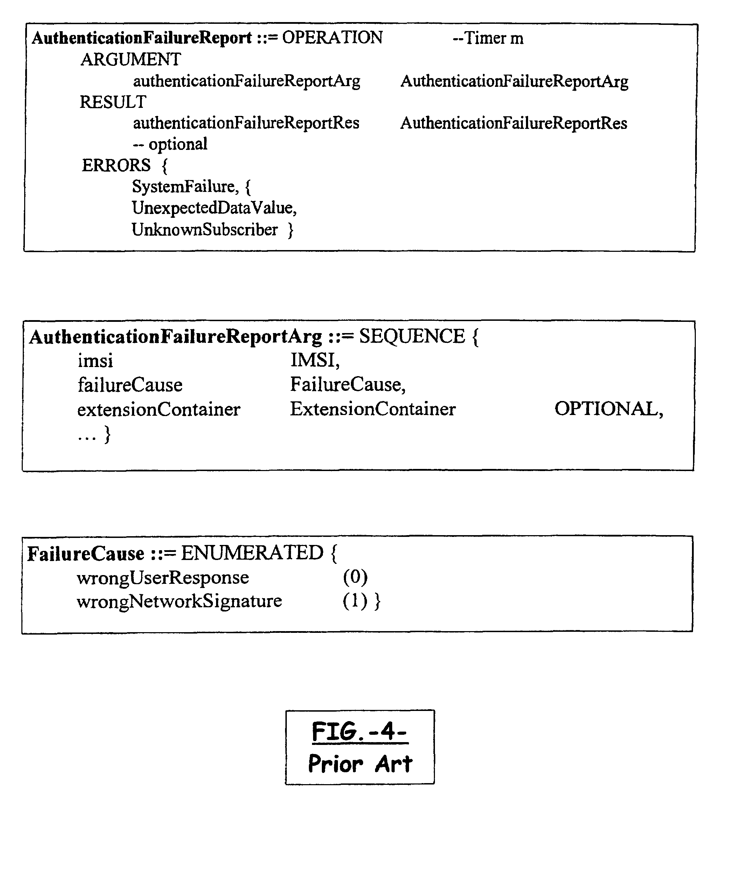

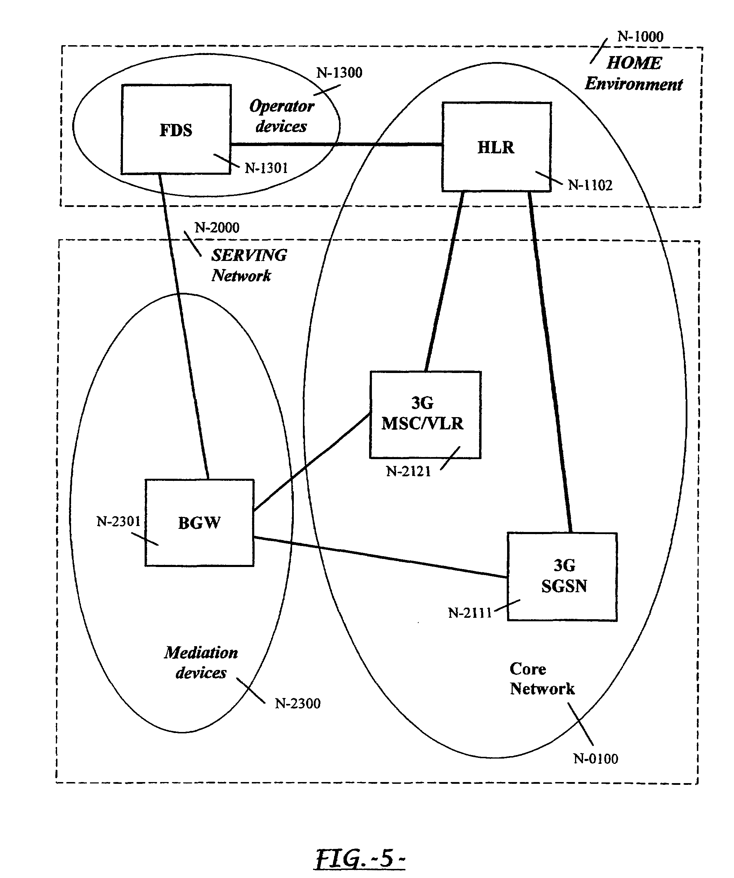

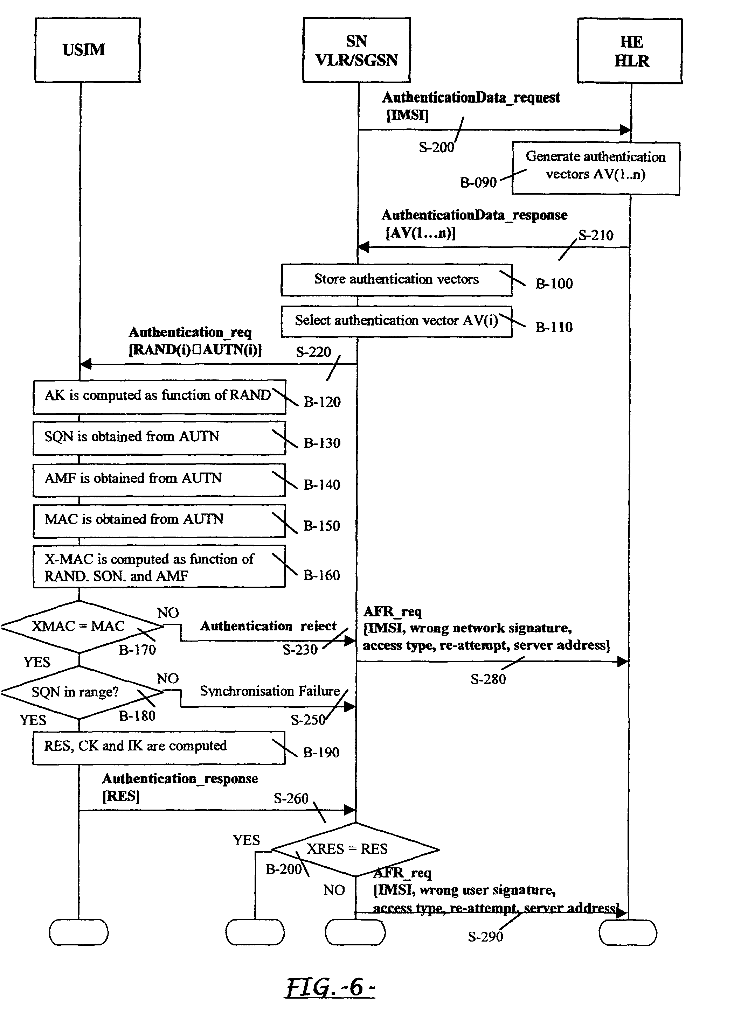

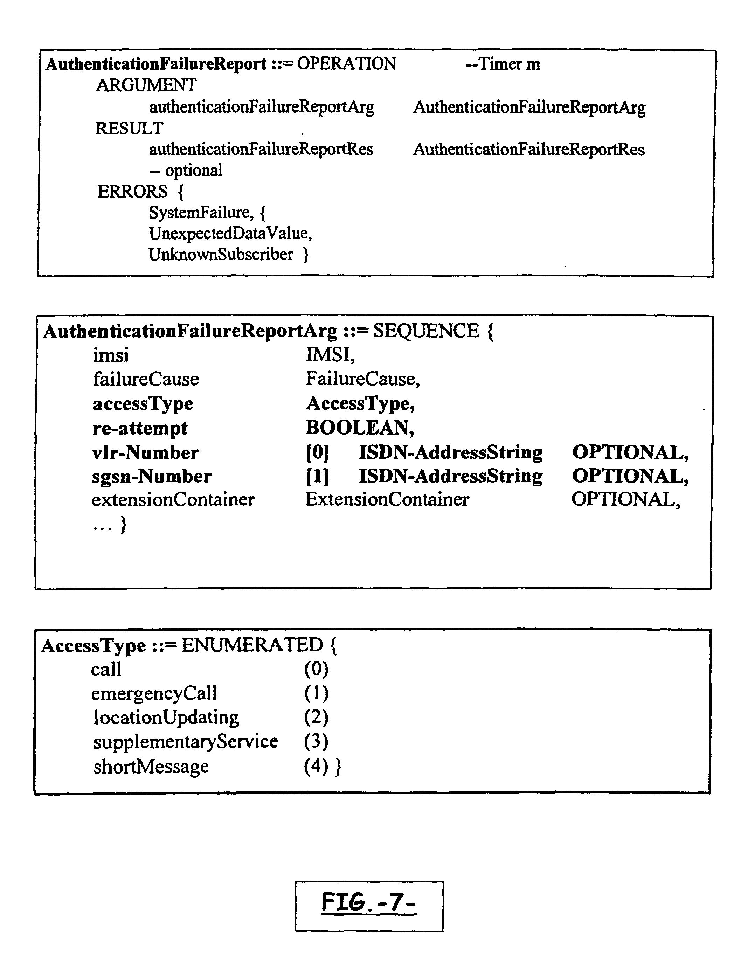

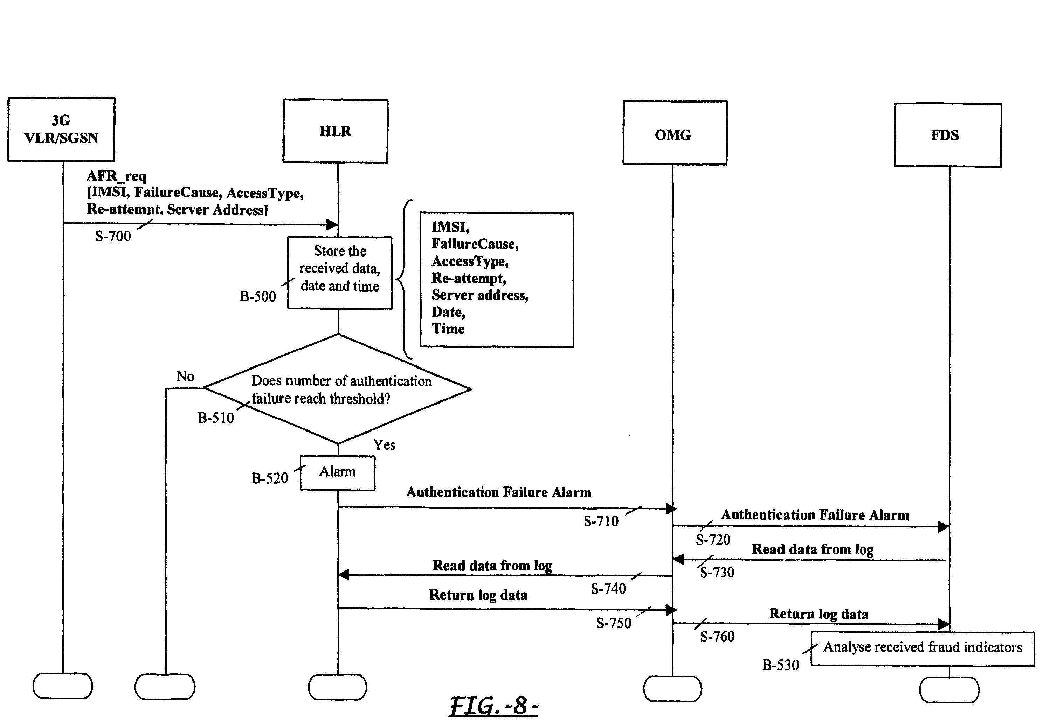

## Claims

1. A method for fraud detection in mobile telecommunications systems comprising the steps of:
a) obtaining secondary fraud indicators which are related to or derivable from authentication failures (S-320) in user authentication procedures due to unsuccessful network authentications or unsuccessful user authentications;
b) including said secondary fraud indicators as new parameters of specific types in an authentication failure report message (S-280) sent from a Serving Environment (N-2000) back to a Home Environment (N-1000) in said authentication procedures; and
c) storing said messages in a Home Location Register (HLR) for further processing.

2. A method according to claim 1, further comprising the step of forwarding an alarm message (S-710, S-710) to a Fraud Detection System (FDS) entity through an Operation and Maintenance Gateway (OMG) when a number of authentication failures of a user exceeds a predetermined value.

3. A method according to claim 1 or 2, further comprising the step of processing authentication failure report messages (S-280) in the fraud detection System (FDS) entity in conjunction with primary fraud indicators, for fraud detection purposes, having obtained said messages from the Home Location Register (N-1102).

4. A method according to any of the preceding claims, **characterized in that** said secondary fraud indicators include an access type of the communication in which the authentication procedure failed.

5. A method according to claim 4, **characterized in that** said access type corresponds at least to a call, an emergency call, a location updating, a supplementary service procedure or a short message transfer.

6. A method according to any of the preceding claims, **characterized in that** said secondary fraud indicators include a re-attempt indicator indicating whether the authentication failure was produced in a normal authentication attempt or in a authentication reattempt.

7. A method according to any of the preceding claims **characterized in that** said secondary fraud indicators include the Visitor Location Register (N-2122) or the Serving GPRS Support Node (N-2112) address.

8. A method according to any of the preceding claims **characterized in that** said secondary fraud indicators are included in extension container fields of said authentication failure report message (S-280) instead of new parameters of specific types.

9. Mobile Service Switching Centre/ Visitor Location Register (N-2122) for fraud detection in mobile telecommunications systems adapted to perform the steps of:
a) obtaining secondary fraud indicators which are related to or derivable from authentication failures (S-320) in user authentication procedures due to unsuccessful network authentications or unsuccessful user authentications;
b) including said secondary fraud indicators as new parameters of specific types in an authentication failure report message (S-280) sent from the Mobile Service Switching Centre/ Visitor Location Register (N-2122) to the Home Environment (N-1000) in said authentication procedures.

10. Serving GPRS Support Node (N-2112) for fraud detection in mobile telecommunications systems adapted to perform the steps of:
a) obtaining secondary fraud indicators which are related to or derivable from authentication failures in user authentication procedures due to unsuccessful network authentications or unsuccessful user authentications;
b) including said secondary fraud indicators as new parameters of specific types in an authentication failure report message (MAP AFR_req) sent from the Serving GPRS Support Node (N-2112) to the Home Environment (N-1000) in said authentication procedures.

## Patentansprüche

1. Verfahren zur Betrugserkennung in Mobiltelekommunikationssystemen, mit den Schritten:
a) Erhalten sekundärer Betrugsanzeiger, die bezogen sind auf oder ableitbar von Authentifizierungsfehlern (S-320) in Benutzerauthentifizierungsprozeduren aufgrund von erfolglosen Netzwerkauthentifizierungen oder erfolglosen Benutzerauthentifizierungen;
b) Einfügen der sekundären Betrugsanzeiger als neue Parameter bestimmter Typen in eine Authentifizierungsfehlerberichtmeldung (S-280), die in den Authentifizierungsprozeduren von einer Versorgungsumgebung (N-2000) zurück an die Heimatumgebung (N-1000) gesendet wird; und
c) Speichern der Meldungen in einer Heimatdatei (Home Location Register - HLR) zur weiteren Bearbeitung.

2. Verfahren nach Anspruch 1, weiterhin umfassend den Schritt des Weiterleitens einer Alarmmeldung (S-710, S-710) an eine Betrugserkennungssystemeinrichtung (Fraud Detection System - FDS) über einen Bedienungs- und Wartungs-Gateway (Operation and Maintenance Gateway - OMG), wenn eine Anzahl von Authentifizierungsfehlern eines Benutzers einen vorbestimmten Wert übersteigt.

3. Verfahren nach Anspruch 1 oder 2, weiterhin umfassend den Schritt des Verarbeitens von Authentifizierungsfehlerberichtmeldungen (S-280) in der Betrugserkennungssystemeinrichtung (FDS) im Zusammenhang mit primären Betrugsanzeigem für Betrugserkennungszwecke, nach Erhalt der Meldungen von der Heimatdatei (N-1102).

4. Verfahren nach einem der vorstehenden Ansprüche, **dadurch gekennzeichnet, dass** die sekundären Betrugsanzeiger einen Zugangstyp der Kommunikation enthalten, in der die Authentifizierungsprozedur misslang.

5. Verfahren nach Anspruch 4, **dadurch gekennzeichnet, dass** der Zugangstyp mindestens einem Anruf, einem Notruf, einer Aufenthaltsbereichaktualisierung, einer ergänzenden Diensteprozedur oder einer Kurzmeldungübertragung entspricht.

6. Verfahren nach einem der vorstehenden Ansprüche, **dadurch gekennzeichnet, dass** die sekundären Betrugsanzeiger einen Neuversuchanzeiger enthalten, der anzeigt, ob der Authentifizierungsfehler bei einem normalen Authentifizierungsversuch oder bei einem Authentifizierungsneuversuch entstand.

7. Verfahren nach einem der vorstehenden Ansprüche, **dadurch gekennzeichnet, dass** die sekundären Betrugsanzeiger die Adresse der Besucherdatei (N-2122) oder des Serving-GPRS-Supportknotens (N-2112) enthalten.

8. Verfahren nach einem der vorstehenden Ansprüche, **dadurch gekennzeichnet, dass** anstelle neuer Parameter bestimmter Typen die sekundären Betrugsanzeiger in Erweiterungs-Containerfeldern der Authentifizierungsfehlerberichtmeldung (S-280) enthalten sind.

9. Mobilfunkvermittlungsstelle/Besucherdatei (N-2122) zur Betrugserkennung in Mobiltelekommunikationssystemen, ausgestaltet zur Durchführung der Schritte:
a) Erhalten sekundärer Betrugsanzeiger, die bezogen sind auf oder ableitbar von Authentifizierungsfehlern (S-320) in Benutzerauthentifizierungsprozeduren aufgrund von erfolglosen Netzwerkauthentifizierungen oder erfolglosen Benutzerauthentifizierungen;
b) Einfügen der sekundären Betrugsanzeiger als neue Parameter bestimmter Typen in eine Authentifizierungsfehlerberichtmeldung (S-280), die in den Authentifizierungsprozeduren von der Mobilfunkvermittlungsstelle/Besucherdatei (N-2122) an die Heimatumgebung (N-1000) gesendet wird.

10. Serving-GPRS-Supportknoten (N-2112) zur Betrugserkennung in Mobiltelekommunikationssystemen, ausgestaltet zur Durchführung der Schritte:
a) Erhalten sekundärer Betrugsanzeiger, die bezogen sind auf oder ableitbar von Authentifizierungsfehlern in Benutzerauthentifizierungsprozeduren aufgrund von erfolglosen Netzwerkauthentifizierungen oder erfolglosen Benutzerauthentifizierungen;
b) Einfügen der sekundären Betrugsanzeiger als neue Parameter bestimmter Typen in eine Authentifizierungsfehlerberichtmeldung (MAP AFR_req), die in den Authentifizierungsprozeduren von dem Serving-GPRS-Supportknoten (N-2112) an die Heimatumgebung (N-1000) gesendet wird.

## Revendications

1. Procédé de détection de la fraude dans des systèmes de télécommunication mobile comprenant les étapes consistant à :
a) obtenir des indicateurs de fraude secondaires qui sont relatifs à ou déduits des échecs d'authentification (S-320) pendant des procédures d'authentification d'utilisateurs en raison d'échecs d'authentification de réseau ou d'échecs d'authentification d'utilisateur ;
b) inclure lesdits indicateurs de fraude secondaires comme des paramètres nouveaux de types spécifiques dans un message de rapport d'échec d'authentification (S-280) renvoyé d'un environnement de desserte (N-2000) à un environnement de rattachement (N-1000) pendant lesdites procédures d'authentification ; et
c) stocker lesdits messages dans un registre de localisation d'origine (HLR) en vue d'un traitement ultérieur.

2. Procédé selon la revendication 1, comprenant en outre l'étape consistant à acheminer un message d'alarme (S-710, S-710) à une entité de système de détection de fraude (FDS, Fraud Detection System) via une passerelle d'exploitation et de maintenance (OMG, Operation and Maintenance Gateway) lorsqu'un nombre d'échecs d'authentification d'un utilisateur excède une valeur prédéterminée.

3. Procédé selon la revendication 1 ou 2, comprenant en outre l'étape consistant à traiter des messages de rapport d'échec d'authentification (S-280) dans l'entité de système de détection de fraude (FDS) en liaison avec des indicateurs de fraude primaires, dans un but de détection de la fraude, en ayant obtenu lesdits messages du registre de localisation d'origine (N-1102).

4. Procédé selon l'une quelconque des revendications précédentes, **caractérisé en ce que** lesdits indicateurs de fraude secondaires incluent un type d'accès de la communication pendant laquelle la procédure d'authentification a échoué.

5. Procédé selon la revendication 4, **caractérisé en ce que** ledit type d'accès correspond au moins à un appel, un appel d'urgence, une mise à jour de localisation, une procédure de service supplémentaire ou un transfert de message court.

6. Procédé selon l'une quelconque des revendications précédentes, **caractérisé en ce que** lesdits indicateurs de fraude secondaires incluent une indicateur de tentative répétée indiquant si l'échec de l'authentification a été produit pendant une tentative d'authentification normale ou pendant une tentative répétée d'authentification.

7. Procédé selon l'une quelconque des revendications précédentes, **caractérisé en ce que** lesdits indicateurs de fraude secondaires incluent l'adresse du registre de localisation visiteur (N-2122) ou du noeud de support GPRS de desserte (N-2112).

8. Procédé selon l'une quelconque des revendications précédentes, **caractérisé en ce que** lesdits indicateurs de fraude secondaires sont inclus dans des champs contenant une extension dudit message de rapport d'échec d'authentification (S-280) au lieu des nouveaux paramètres des types spécifiques.

9. Centre de commutation pour les services mobiles/ registre de localisation visiteur (N-2122) pour la détection de fraude dans des systèmes de télécommunication mobile, adapté afin d'effectuer les étapes consistant à :
a) obtenir des indicateurs de fraude secondaires qui sont relatifs à ou déduits des échecs d'authentification (S-320) pendant des procédures d'authentification d'utilisateurs en raison d'échecs d'authentification de réseau ou d'échecs d'authentification d'utilisateur ;
b) inclure lesdits indicateurs de fraude secondaires comme des paramètres nouveaux de types spécifiques dans un message de rapport d'échec d'authentification (S-280) envoyé du centre de commutation pour les services mobiles/ registre de localisation d'origine (N-2122) à l'environnement de rattachement (N-1000) pendant lesdites procédures d'authentification.

10. Noeud de support GPRS de desserte (N-2112) pour la détection de fraude dans des systèmes de télécommunications mobiles, adapté afin d'effectuer les étapes consistant à :
a) obtenir des indicateurs de fraude secondaires qui sont relatifs à ou déduits d'échecs d'authentification pendant les procédures d'authentification d'utilisateur en raison d'échecs d'authentification de réseau ou d'échecs d'authentification d'utilisateur ;
b) inclure lesdits indicateurs de fraude secondaires comme des nouveaux paramètres de types spécifiques dans un message de rapport d'échec d'authentification (MAP AFR_req) envoyé du noeud de support GPRS de desserte (N-2112) à l'environnement de rattachement (N-1000) pendant lesdites procédures d'authentification.
